Europäisches Patentamt

European Patent Office

Office européen des brevets

(19)

(11) Publication number: **0 096 401**

**A1**

(12) **EUROPEAN PATENT APPLICATION**

(21) Application number: **83105532.2**

(22) Date of filing: **06.06.83**

(51) Int. Cl.³: **H 04 M 11/04**
**G 08 B 25/02**

(30) Priority: **07.06.82 JP 96271/82**
**08.06.82 JP 96906/82**
**10.06.82 JP 98533/82**
**14.06.82 JP 100760/82**

(43) Date of publication of application:
**21.12.83 Bulletin 83/51**

(84) Designated Contracting States:
**DE FR GB**

(71) Applicant: **Wagner Shokai Inc.**
**14-4, Yanagibashi 2-chome**
**Taito-ku Tokyo(JP)**

(72) Inventor: **Kojima, Minoru**
**22-7, Misono-cho**
**Tatebayashi-shi Gunma-ken(JP)**

(74) Representative: **Riederer Freiherr von Paar zu Schönau,**
**Anton**
**Freyung 615 Postfach 2664**
**D-8300 Landshut(DE)**

(54) Automatic dialing system.

(57) An automatic dialing system connected to telephone lines and adapted to automatically send information by telephone. The system has a signal receiving circuit (74), telephone number memorizing device (22), and an aural information recording device (16). The telephone number memorizing device memorizes telephone numbers corresponding to telephone lines through which aural information is sent when the signal receiving circuit has received a predetermined signal. When the signal receiving circuit has received a predetermined signal, a telephone number is read out and call signals therefor are delivered. The aural information recording device records aural information which is to be sent when the signal receiving circuit has received a predetermined signal. When the signal receiving circuit has received a predetermined signal, the aural information recording device delivers aural information through telephone lines specified by call signals.

FIG. 4

PATENTANWÄLTE

Wagner Shokai Inc.
14-4, Yanagibashi 2-chome,
Taito-ku, Tokyo, Japan

Dipl.-Ing. Peter Freiherr
Riederer von Paar
D-8300 Lan 0096401
Postfach 2664, Freyung 615
℡ Landshut (0871) 22170
Fax (CCITT 2) 2 min, manuell
Telex 58441 glala d

Partner in München:
DIEHL & KRESSIN
Dr. H. O. Diehl, Dr. H-R. Kressin
℡ München (089) 177061

AUTOMATIC DIALING SYSTEM

1. Field of the Invention

The present invention relates to an automatic dialing system connected to telephone lines and adapted to automatically send information by telephone.

2. Description of the Prior Art

Conventional devices called "automatic dialer" are adapted to memorize desired telephone numbers in advance, and deliver call signals for the telephone numbers when the operator activates the device by manual operation.

However, such conventional automatic dialers only dial the desired telephone numbers and cannot do anything at all after the telephone receiver is taken off. They do not go the length of automatically sending aural information to the person who answers the telephone, and therefore the operator has to send necessary information by himself.

BRIEF SUMMARY OF THE INVENTION

An automatic dialing system of the present invention is connected to telephone lines and adapted to automatically send information by telephone. The system has a signal receiving circuit, a telephone number memorizing device, and an aural information recording device. The telephone number memorizing device memorizes telephone numbers corresponding to telephone lines through which aural information is sent when the signal receiving circuit has received a predetermined signal. When the signal receiving circuit has received a predetermined signal, a telephone number is read out and call signals therefor are delivered. The aural information recording device records aural information which is to be sent when the signal receiving circuit has received a predetermined signal. When the signal receiving circuit has received a predetermined signal, the aural information recording device delivers aural information through telephone lines specified by call signals.

It is an object of the invention to provide an automatic dialing system which can automatically send aural information to a telephone connected to predetermined telephone lines when the system has received a predetermined signal.

It is another object of the invention to provide an automatic dialing system which can automatically dial a predetermined telephone number when it has received a predetermined signal, and automatically send aural information when the telephone has been answered.

It is a further object of the invention to provide an automatic dialing system which can automatically dial a plurality of predetermined telephone numbers in regular sequence when the system has received a predetermined signal, and automatically send aural information each time the telephone has been answered.

It is still another object of the invention to provide an automatic dialing system which, when it has received one of a plurality of predetermined channel signals, can automatically dial a telephone number corresponding to the channel signal received, and automatically send aural information corresponding to the channel signal when the telephone has been answered.

It is still a further object of the invention to provide an automatic dialing system which, when it has received one of a plurality of predetermined channel signals, can automatically dial in regular sequence a plurality of telephone numbers corresponding to the channel signal received, and automatically send aural information corresponding to the channel signal each time the telephone has been answered.

Other and further objects, features and advantages of the invention will appear more fully from the following description.

BRIEF DESCRIPTION OF THE DRAWINGS

Fig. 1 is a perspective upper front view illustrating an automatic dialing system according to a preferred embodiment of the invention.

Fig. 2 is a perspective rear view illustrating the system of Fig. 1.

Fig. 3 is an enlarged front view showing a keyboard of the system of Fig. 1.

Fig. 4 is a block diagram showing electric components of the system of the invention.

Fig. 5 is a plan view showing a tape recording and playing device in said system, a head base of said device being in a releasing position.

Fig. 6 is a partially sectional side view of the tape recording and playing device of Fig. 5..

Fig. 7 is a bottom view of the tape recording and playing device of Fig. 5.

Fig. 8 is a partially omitted plan view showing the tape recording and playing device, the head base of which is in a setting position.

Fig. 9 is a partially omitted side view of the tape recording and playing device of Fig. 8.

Fig. 10 is a partially omitted bottom view of the tape recording and playing device of Fig. 8.

Fig. 11 is a perspective view illustrating an automatic dialing system according to another embodiment of the invention, which comprises said system of Fig. 1  and a transmitter used therewith.

Fig. 12 is a block diagram showing electric components of the transmitter in said system of Fig. 11.

Figs. 13a to 13e are flow charts showing procedures for storing telephone numbers in the system of the invention.

Fig. 14 is a flow chart showing procedures for recording aural information in the system of the invention.

Fig. 15 is a flow chart showing procedures for reproducing aural information in the system of the invention.

Figs. 16a to 16d are flow charts showing the operation of the system of the invention.

DETAILED DESCRIPTION OF THE PREFERRED EMBODIMENTS

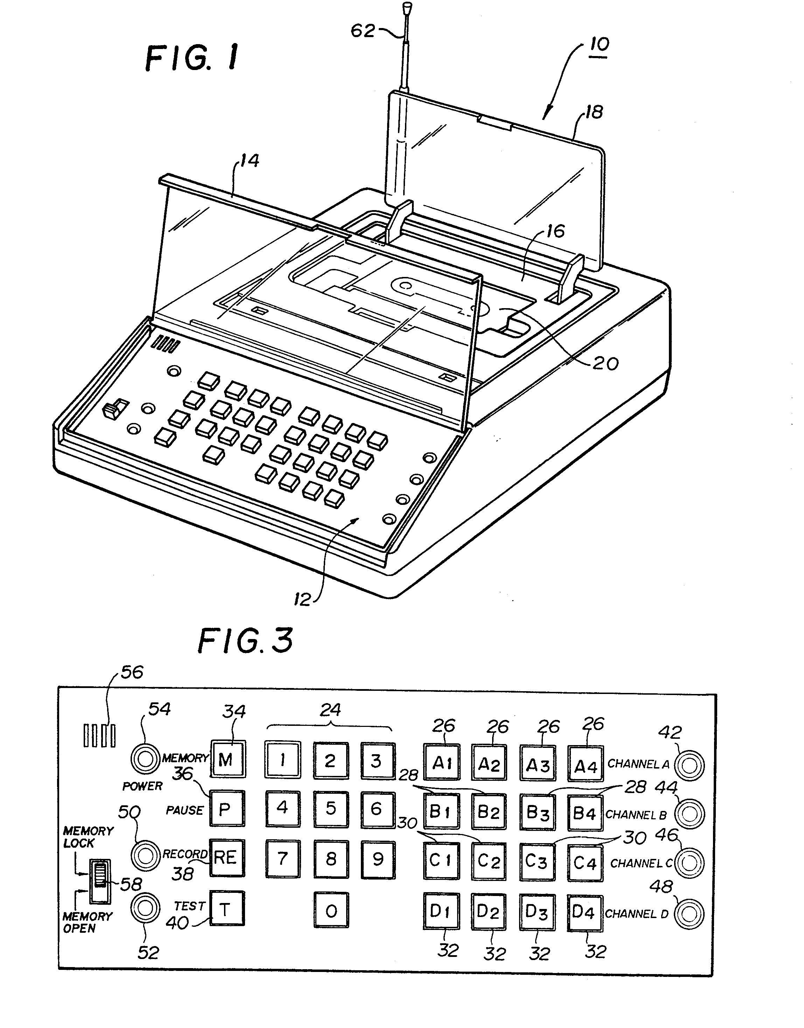

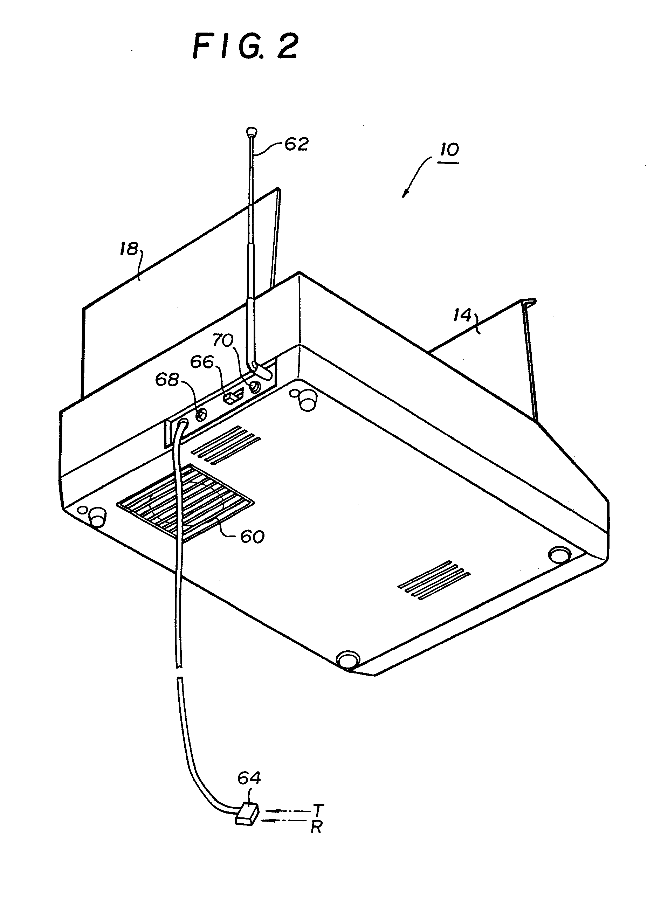

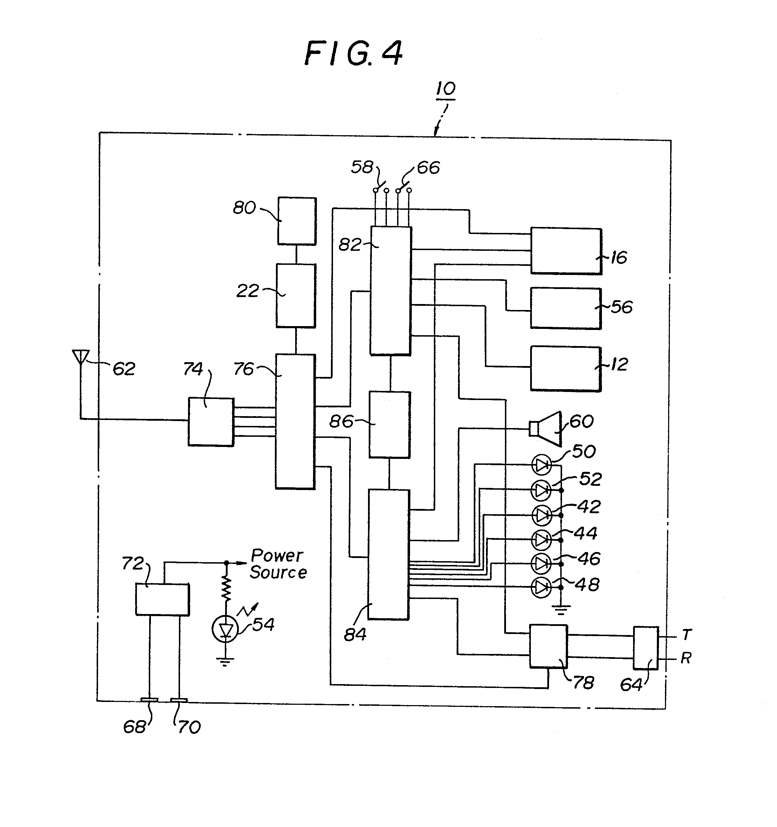

Referring to the attached drawings, an automatic dialing system 10 according to a preferred embodiment of the present invention is shown from different angles in Figs. 1 and 2. The automatic dialing system 10 comprises a keyboard 12 having an openable front cover 14 which is preferably made of a transparent or semitransparent material. A tape recording and playing device 16 has a top cover 18 adapted to open and close so that a magnetic tape (e.g. a tape cassette 20) preferably of an endless type can be put into and removed from the device 16, and a memory 22 which will be described later with reference to Fig. 4. If desired aural information is recorded in the magnetic tape 20 in advance, the tape recording and playing device 16 may be replayed by a suitable, simple tape playing device which has only a playing function and does not have a recording function.

Also, it is possible to dispense with the magnetic tape 20 and use a suitable speech synthesizing device adapted to deliver the desired aural information.

As shown in Fig. 3, the keyboard 12 has ten keys 24 respectively bearing numerals "0" to "9" by means of which keys telephone numbers are inputted, telephone number memory keys 26 with symbols "$A_1$", "$A_2$", "$A_3$" amd "$A_4$" for storing in the memory 22 four different telephone numbers for a channel A, telephone number memory keys 28 with symbols "$B_1$", "$B_2$", "$B_3$" and "$B_4$" for storing in the memory 22 four different telephone numbers for a channel B, telephone number memory keys 30 with symbols "$C_1$", "$C_2$", "$C_3$" and "$C_4$" for storing in the memory 22 four different telephone numbers for a channel C, telephone number memory keys 32 with symbols "$D_1$", "$D_2$", " $D_3$" and "$D_4$" for storing in the memory 22 four different telephone numbers for a channel D, a memory key 34 marked with the letter "M", a pause key 36 bearing the letter "P", a record key 38 with letters "RE" for letting the tape recording and playing device 16 perform a recording operation, and a test key 40 with the letter "T" for letting the tape recording and playing device 16 perform a playing operation. The number of channels may be changed freely. Also, the number of telephone numbers stored in the memory 22 for each channel may be changed freely.

Further provided on the panel of the keyboard 12 are channel indicators 42, 44, 46 and 48 corresponding to the channels A, B, C and D, said channel indicator 42, 44, 46 or 48 being turned on when the corresponding channel A, B, C or D is selected, a recording indicator 50 which is turned on when the tape recording and playing device 16 is performing a recording operation, a playing indicator 52 which is turned on when the tape recording and playing device 16 is performing a playing operation, and a power indicator 54 which is turned on when the automatic dialing system 10 is energized. The panel of the keyboard 12 is also provided with a condenser microphone 56 and a switch 58 for selection between a "memory lock" position in which all the keys on the keyboard 12 are in disabled electric condition and a "memory open" position in which they are in enabled electric condition.

As shown in Fig. 2, the automatic dialing system 10 is provided at its bottom with a speaker 60, and at its rear with a rod antenna 62, a telephone connector 64 for connection with a pair of telephone lines T (tip) and R (ring), a switch 66 by means of which call signals for telephone numbers are selected between 20 pps (pulses per second) and 10 pps, a jack 68 for connection with a suitable AC adapter, and a jack 70 for connection with a suitable DC battery. The rod antenna 62 receives electric waves for actuating the automatic dialing system 10. However, the rod antenna 62 is not necessary when the system 10 is actuated by means of, for example, ON-OFF signals of a switch (not shown) connected with the system 10 by wires, or certain aural signals inputted through the microphone 56.

As shown in Fig. 4, the automatic dialing system 10 has a power circuit 72 for supplying electric circuits within the system 10 with DC voltage received through the AC adapter connected to the jack 68 or from the DC battery connected to the jack 70. The system 10 is further provided with a receiver circuit 74 for receiving signals inputted through the rod antenna 62 or from the switch (not shown) connected with the system 10 by wires, or aural signals inputted through the microphone 56, and adjusting the signals so as to suit them to subsequent processing within the automatic dialing system 10, a CPU (central processing unit) 76 for judging which of the channels A, B, C and D the signal received by the receiver circuit 74 belongs to and then processing the signal, and a control circuit 78 for adjusting output signals, prepared within the automatic dialing system 10, into signals suitable for being delivered through the telephone lines T and R. The CPU 76 is connected with the memory 22 which, in turn, is connected with a backup power supply 80. The CPU 76 is also connected with an input interface 82 which is connected with the keyboard 12, tape recording and playing device 16, condenser microphone 56, switches 58 and 66, and control circuit 78. The CPU 76 is further connected with an output interface 84 which is connected with the tape recording and playing device 16,
indicator 42, 44, 46, 48, 50 and 52, speaker 60 and control
circuit 78.  Furthermore, the CPU 76 is directly connected
with the tape recording and playing device 16 and control
circuit 78, and is also connected through the input interface
82 and output interface 84 with a single amplifier 86.
This amplifier 86 is a common one for both the microphone 56
and speaker 60..

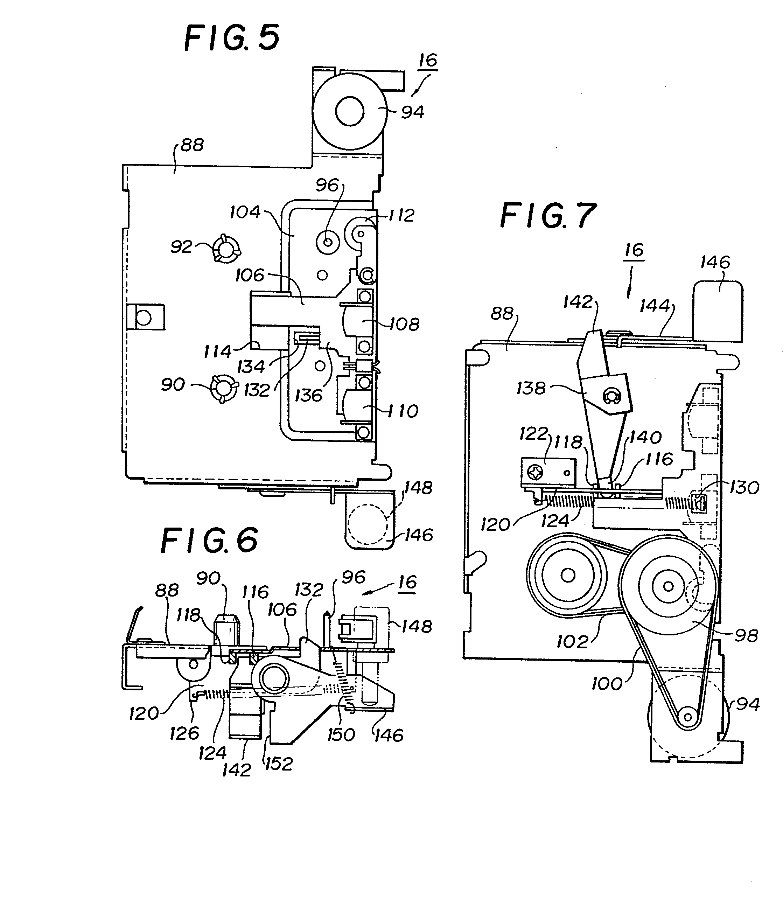

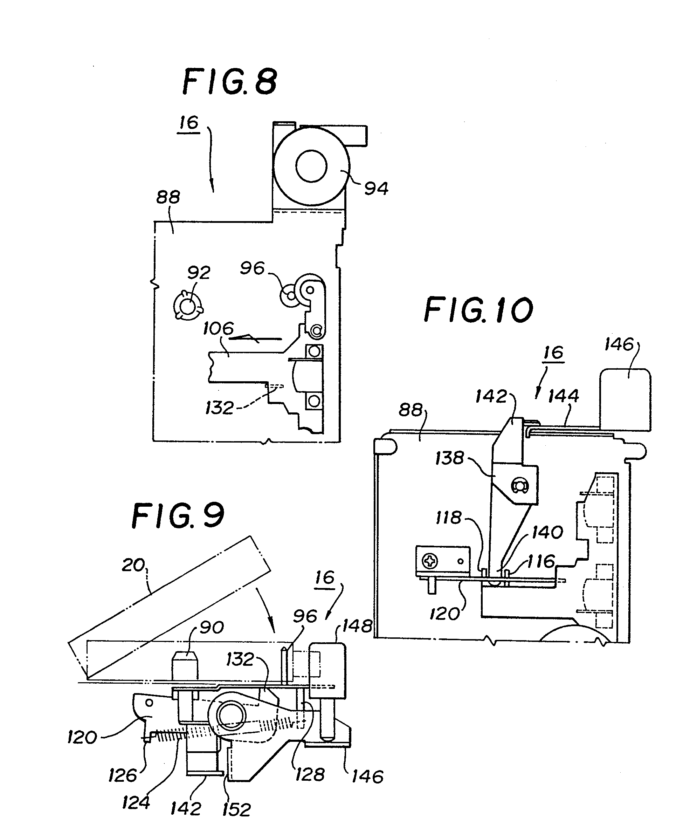

A tape recording and playing device 16 shown in
Figs. 5 to 10 is suitable for an endless cassette tape.
A reel base 88 secured to the housing of the automatic dialing
system 10 is provided with a pair of reel shafts 90 and
92, an electric motor 94, a capstan 96 rotating in a body
with a flywheel 98 driven by the electric motor 94 through
a belt 100. The reel shaft 92 is connected with the capstan
96 by a belt 102 so that they rotate at the same time.  The
reel base 88 is provided in its front with a shallow recess
104, within which a head base 106 carrying a recording and
playing head 108, an erasing head 110 and a pinch roller 112
is disposed so as to be slidable between a releasing
position shown in Fig. 5  and a setting position shown in
Fig. 8.  A rear extension of the head base 106 passes through
an opening 114 of the reel base 88 and protrudes under the
reel base 88, said extension being provided at its rear with
a pair of projections 116 and 118, one in front of the other.

The rear end of a stop lever 120 is pivotally attached to a bracket 122 fixed to the lower surface of the reel base 88. A spring 124 is disposed between a projection 126 protruding downward from the stop lever 120 and another projection 128 extending downward from the head base 106 through an opening 130 formed in the reel base 88. When a latch portion 132 formed at the front end of the stop lever 120 is protruded upward from an opening 134 of the reel base 88 by the force of the spring 124, a stopper portion 136 of the head base 106 is pushed forward by the latch portion 132 so as to keep the head base 106 in the releasing position (Fig. 5). When the latch portion 132 is pushed down into the opening 134 by the lower surface of a cassette tape 20 loaded, the head base 106 is kept in the setting position as shown in Fig. 8. When the head base 106 is in the setting position, the pinch roller 112 keeps the tape in pressing contact with the capstan 96 so that the tape travels in one direction with the rotation of the electric motor 94, the recording and playing head 108 and the erasing head 110 both being in contact with the tape so as to perform a recording, playing or erasing function in accordance with electric signals. Preferably, the tape is an endless tape having four tracks so that aural information for channels A, B, C and D can be independently recorded and reproduced.

The head base 106 is kept in the setting position all the time when the cassette tape 20 is loaded. If the tape is left as it is for a long period of time, the same portion of the pinch roller 112 keeps pressing the tape and therefore the tape may stick to said portion of the pinch roller 112. If no measures are taken to prevent such sticking of the tape to the pinch roller 112, some trouble will almost inevitably occur when the electric motor 94 is started. To prevent such a trouble, it is desirable that the CPU 76 actuates the electric motor 94 to rotate the pinch roller 112 for a certain amount at certain time intervals. The time intervals are optional and may be, for example, every a few hours. The amount of rotation of the pinch roller 112 may be such that the contact area between the pinch roller 112 and the tape is slightly changed.

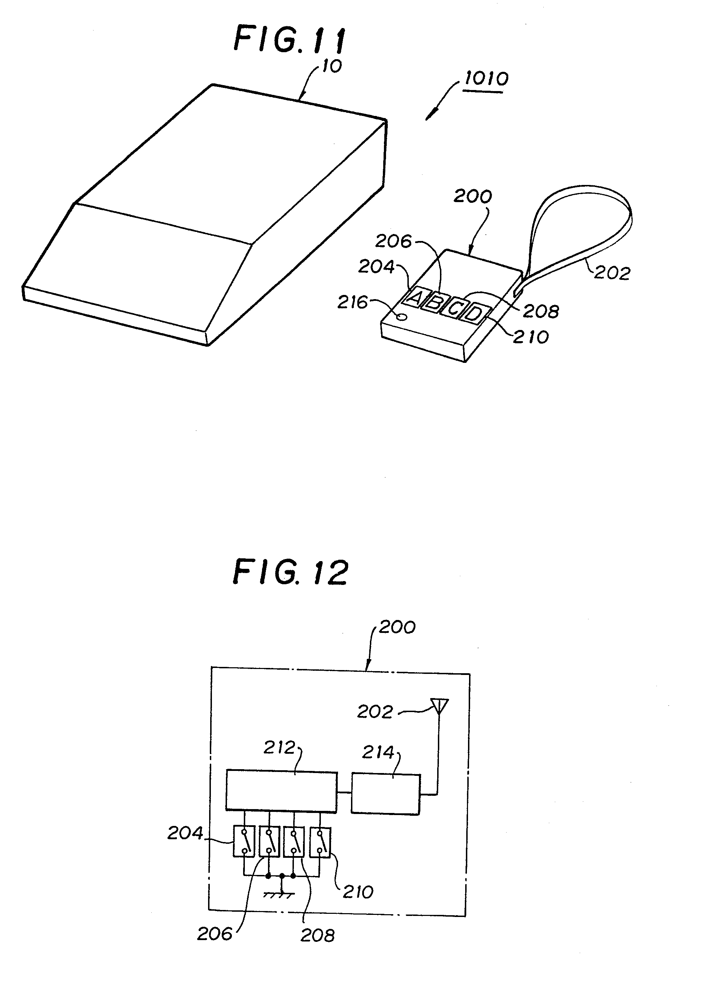

A changeover lever 138 is pivotally attached to the lower surface of the reel base 88. The inner end 140 of the changeover lever 138 is inserted between the projections 116 and 118 of the head base 106, and the outer end 142 of the changeover lever 138 extends to one side of the reel base 88. To this side of the reel base 88, an ejection lever 144 is pivotally attached, which lever is provided at its front end with a sideway projecting portion 146 so that the ejection lever 144 is pushed down by an ejection button 148 when the button 148 is pushed down. A spring 150 is disposed between the reel base 88 and the projecting portion 146 of the ejection lever 144 so that a lower end 152 of the ejection lever 144 does not apply any force to the outer end 142 of the changeover lever 138 when the ejection button 148 is not pushed. When the cassette tape 20 is loaded and the head base 106 is in the setting position, the inner end 140 of the changeover lever 140 is in a rear position and the outer end 142 thereof is in a front position as shown in Fig. 10. When the ejection button 148 is pushed, the projecting portion 146 of the ejection lever 144 is pushed down thereby, the lower end 152 of the ejection lever 144 pushing back the outer end 142 of the changeover lever 138, the inner end 140 of the changeover lever 138 pushing forward the projection 116 and therefore the head base 106, the stopper portion 136 of the head base 106 being pushed forward by the latch portion 132 of the stop lever 120 so that the head base 106 is in the releasing position, the latch portion 132 of the stop lever 120 pushing up the cassette tape 20 to eject it.

Fig. 11 shows an automatic dialing system 1010 according to another embodiment of the present invention. The automatic dialing system 1010 comprises said automatic dialing system 10 shown in Figs. 1 and 2 and a transmitter 200 for transmitting electric waves for actuating said automatic dialing system 10. The automatic dialing system 10 itself is the same as mentioned above and will not be described here again.   The transmitter 200 is small and portable, and has a strap 202 comprising a flexible wire antenna covered with rubber, etc., said strap 202 serving both as a handle and as an antenna.   The transmitter 200 has four command keys 204, 206, 208 and 210 with the letters "A", "B", "C" and "D", by means of which keys the channels A, B, C and D are respectively selected.   As shown in Fig. 12, the transmitter 200 is also provided with a channel signal generating circuit 212 for generating a channel signal when one of the command keys 204, 206, 208 and 210 is pushed, and with a transmitting circuit 214 for transmitting the channel signals with carrier waves from the wire antenna of the strap 202.   The transmitter 202 is further provided with a battery check lamp 216 which is repeatedly turned on and off while a channel signal is transmitted by pushing one of the command keys 204, 206, 208 and 210.   When a battery (not shown) contained in said transmitter 200 is exausted, the battery check lamp 216 is not turned on and off even when one of the command keys 204, 206, 208 and 210 is pushed. This means that no channel signal is transmitted.   In such a case, the transmitter 200 becomes usable again if the battery is replaced by a new one or the battery is charged.

To use the automatic dialing system 10 or 1010, it is necessary to make preparations as follows:

Telephone numbers are stored in the memory 22 as

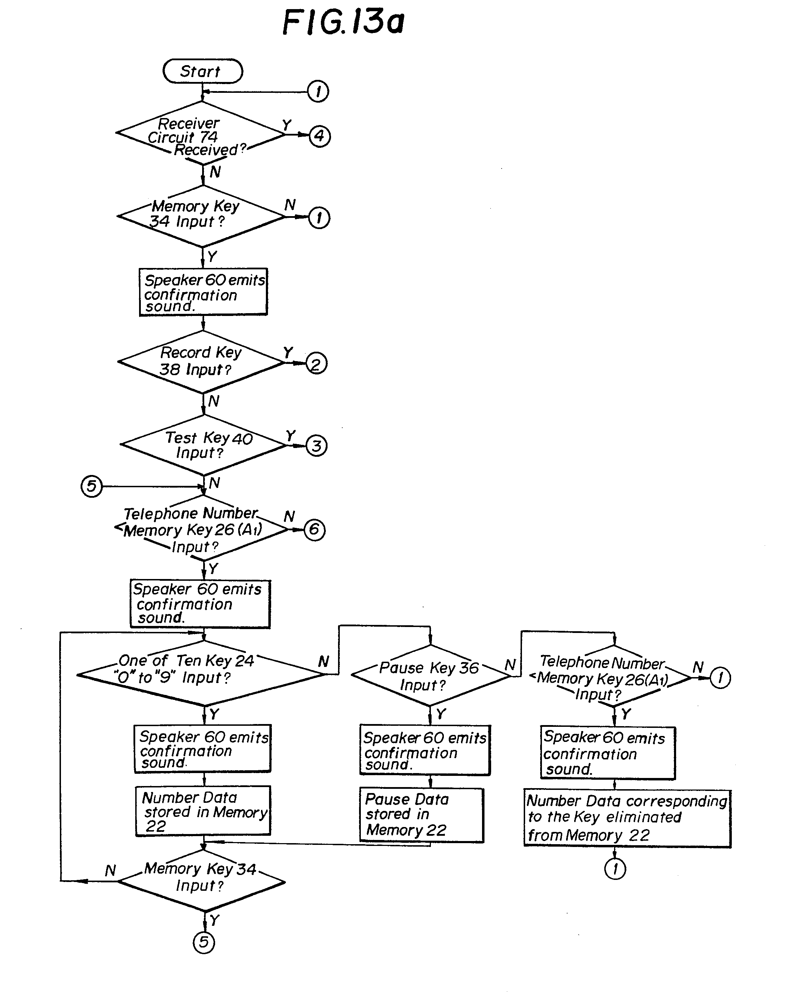

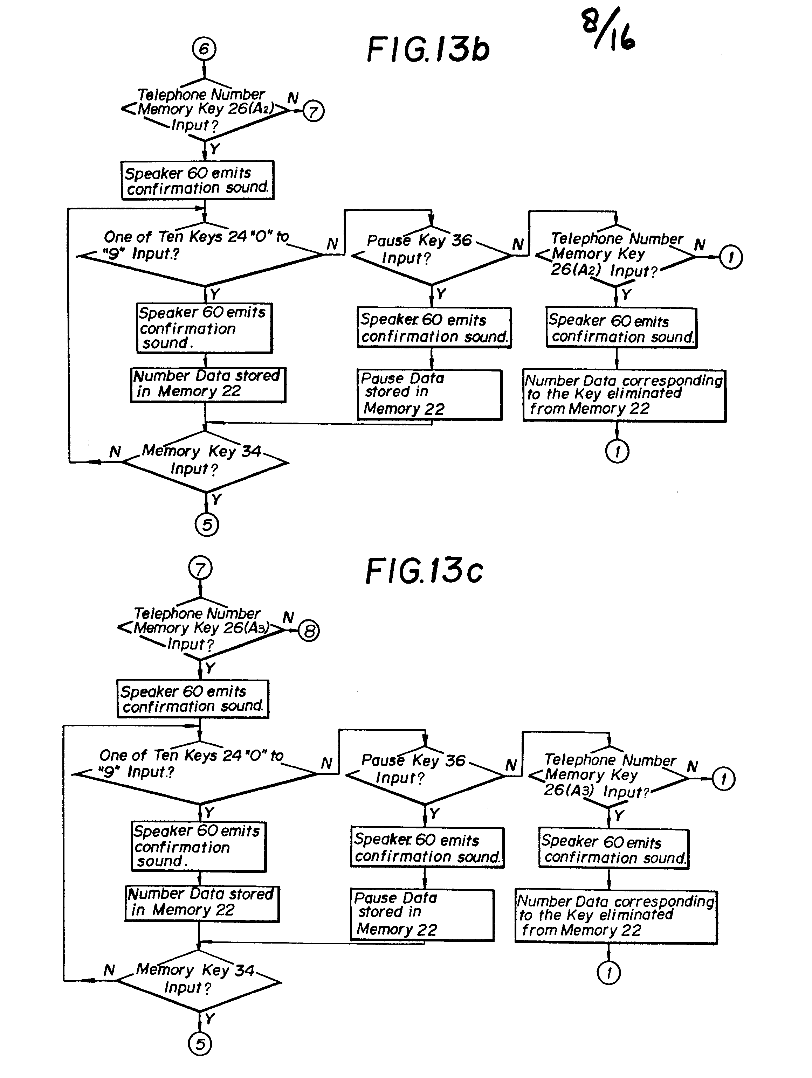

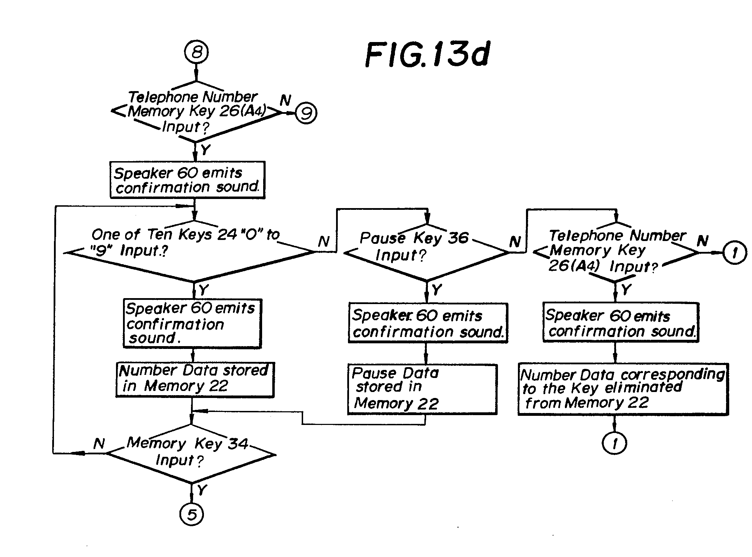

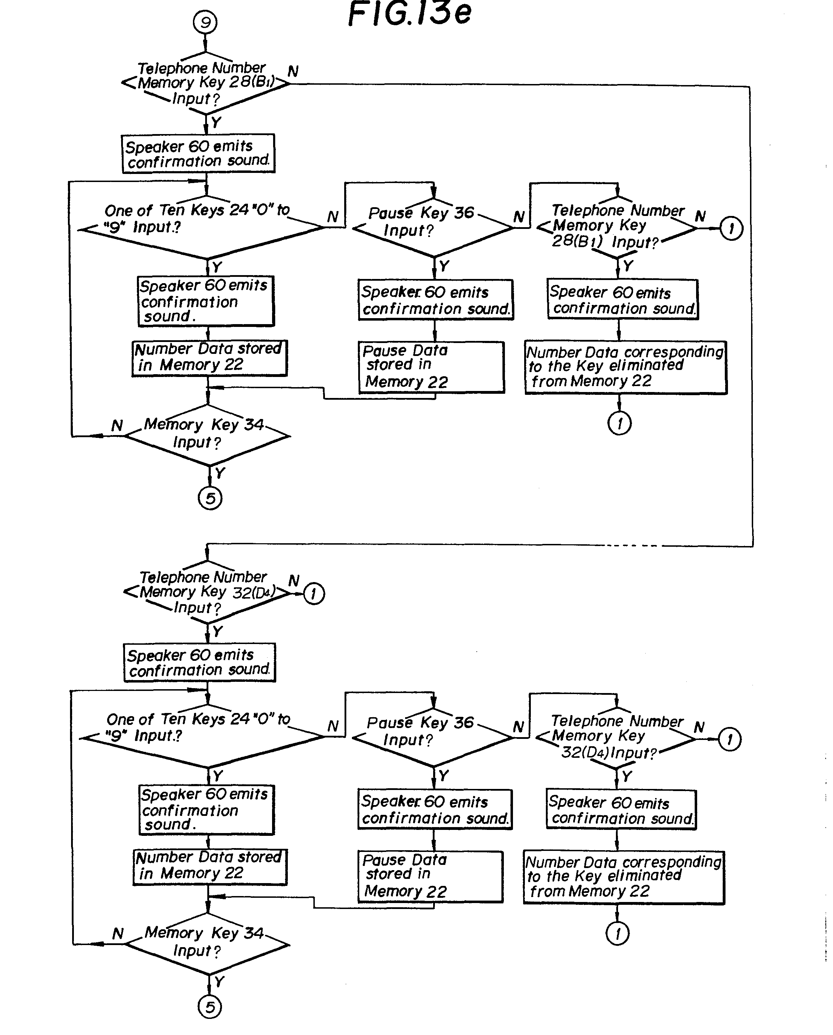

follows: First, the AC adapter is connected to the jack 68, or the DC battery is connected to the jack 70. Then, the power indicator 54 will be turned on, and DC voltage will be supplied to each electric circuit of the automatic dialing system 10. The switch 58 is set on the "memory open" position in which all the keys on the keyboard 12 are in enabled electric condition. In this state if the following procedures are taken, the CPU 76 will behave in accordance with a program to store telephone numbers in the memory 22 as shown in Figs. 13a to 13e. Flow charts for telephone number memory keys 28 ($B_1$) to ($B_4$), 30 ($C_1$) to ($C_4$) or 32 ($D_1$) to ($D_4$) are the same as the flow charts of Figs. 13a to 13d for telephone number memory keys 26 ($A_1$) to ($A_4$). Therefore, Fig. 13e shows procedures for the telephone number memory keys 28 ($B_1$) and 32 ($D_4$) only, and does not show procedures for the telephone number memory keys 28 ($B_2$) to ($B_4$), 30 ($C_1$) to ($C_4$) and 32 ($D_1$) to ($D_3$).

First, the memory key 34 is pushed. At this time, the speaker 60 will emit a sound for confirmation. Then, an address within the memory 22 is determined by pushing one of the telephone number memory keys 26 ($A_1$), to 26 ($A_4$), 28 ($B_1$) to 28 ($B_4$), 30 ($C_1$) to 30 ($C_4$) or 32 ($D_1$) to 32 ($D_4$). At this time, the sound for confirmation is emitted again. Now a desired telephone number is inputted by means of the ten keys 24. The sound for confirmation will be emitted each time a key 24 is pushed. If, for example, a telephone exhange within an office needs "0" before the telephone number for connection with a city telephone, the key 24 for "0" and then the pause key 36 are pushed before the telephone number is inputted. After the telephone number is inputted, the memory key 34 is pushed again. Now the inputted telephone number is stored in the address within the memory 22. Next, another one of the telephone number momory keys 26 ($A_1$) to 26 ($A_4$), 28 ($B_1$) to 28 ($B_4$), 30 ($C_1$) to 30 ($C_4$) and 32 ($D_1$) to 32 ($D_4$) is pushed, and another telephone number is inputted. In the same way, each of other desired telephone numbers is inputted for each of other telephone number memory keys. Thus, these telephone numbers are stored in their respective addresses within the memory 22.

Any telephone number stored in the memory 22 can be erased as follows: The memory key 34 is pushed, and then one telephone number memory key corresponding to the stored telephone number to be erased is pushed. Next, the same telephone number memory key is pushed without the keys 24 being pushed.

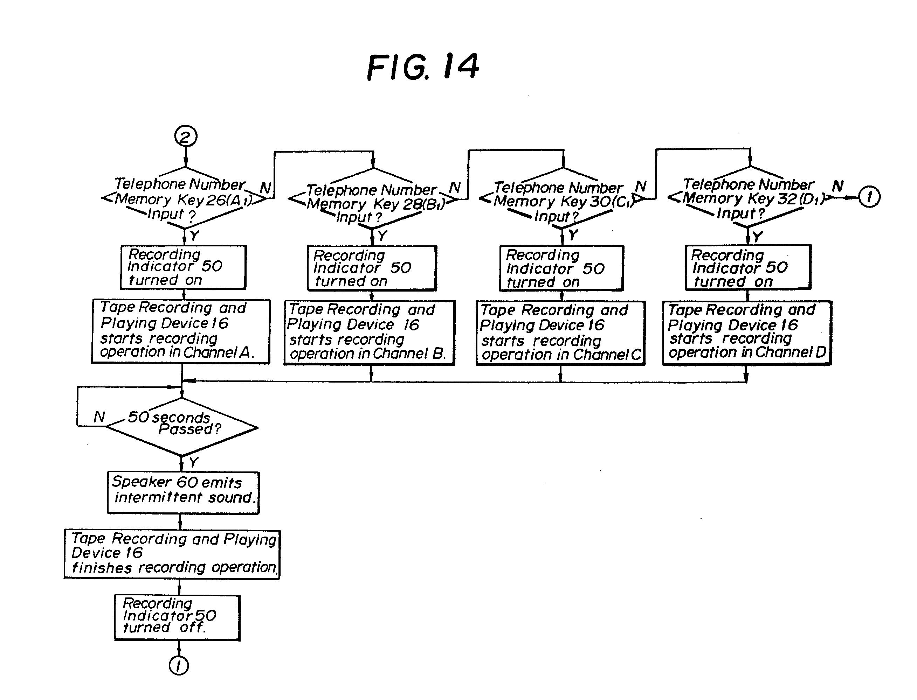

Aural information is recorded as follows: First, DC voltage is supplied to each electric circuit of the automatic dialing system 10 and the switch 58 is pushed to the "memory open" position in the same way as in storing telephone numbers. Then, the top cover 18 is opened and the cassette magnetic tape 20 is loaded into the tape recording and playing device 16. Then, the head base 106 will be changed over to the setting position, the pinch roller 112 pressing the tape against the capstan 96, the recording and playing head 108 and the erasing head 110 both contacting the tape. In this state, if the following procedures are taken, the CPU 76 will behave in accordance with a program to store the aural information in the cassette magnetic tape 20 as shown in Fig. 14. First, the memory key 34 is pushed. At this time, the speaker 60 will emit a sound for confirmation. The record key 38 is pushed. Then, a recording location within the cassette magnetic tape 20 corresponding to one of the channels A, B, C and D, that is, preferably a track corresponding to said one of the channels, is determined by pushing one of the telephone number memory keys 26 ($A_1$), 28 ($B_1$), 30 ($C_1$) and 32 ($D_1$). Then, the recording indicator 50 and one of the channel indicators 42, 44, 46 and 48 corresponding to said one of the channels A, B, C and D will be turned on, and the tape recording and playing device 16 will start the recording operation. If desired aural information is inputted through the microphone 56 at this time, the aural information will be recorded in the recording location, preferably the track, on the cassette magnetic tape 20. In a certain period of time (about 50 seconds, for example) after the starting of the recording operation, the speaker 60 will emit an intermittent sound, the tape recording and playing device 16 finishing the recording operation and the recording indicator 50 being turned off. When the cassette magnetic tape 20 is of the endless type, the tape may have a length such that it returns to the initial position at this time (that is, a length such that the tape can record the aural information only one time), or the tape may be long enough to record the aural information a plurality of times. In the latter case, the above-mentioned procedures are repeated. Next, the memory key 34, record key 38 and another one of the telephone number memory keys 26 ($A_1$), 28 ($B_1$), 39 ($C_1$) and 32 ($D_1$) are pushed in this order, and then the aural information is inputted. In the same way, desired aural information is inputted for each of the telephone number memory keys 26 ($A_1$), 28 ($B_1$), 30 ($C_1$) and 32 ($D_1$). Thus, each piece of such aural information is stored in its location within the cassette magnetic tape 20, preferably in its track and in the same position with reference to the tape length. The telephone number memory key 26 ($A_1$) actuates the tape recording and playing device 16 on behalf of the four keys 29 ($A_1$) to ($A_4$) in the channel A. The telephone number memory key 28 ($B_1$) actuates the tape recording and playing device 16 on behalf of the four keys 28 ($B_1$)

to $(B_4)$ in the channel B. The telephone number memory key 30 $(C_1)$ actuates the tape recording and playing device 16 on behalf of the four keys 30 $(C_1)$ to $(C_4)$ in the channel C. The telephone number memory key 32 $(D_1)$ actuates the tape recording and playing device 16 on behalf of the four keys 32 $(D_1)$ to $(D_4)$ in the channel D. The cassette magnetic tape 20 is preferably an endless tape having four tracks corresponding to the channels A, B, C and D, but it is not restricted thereto.

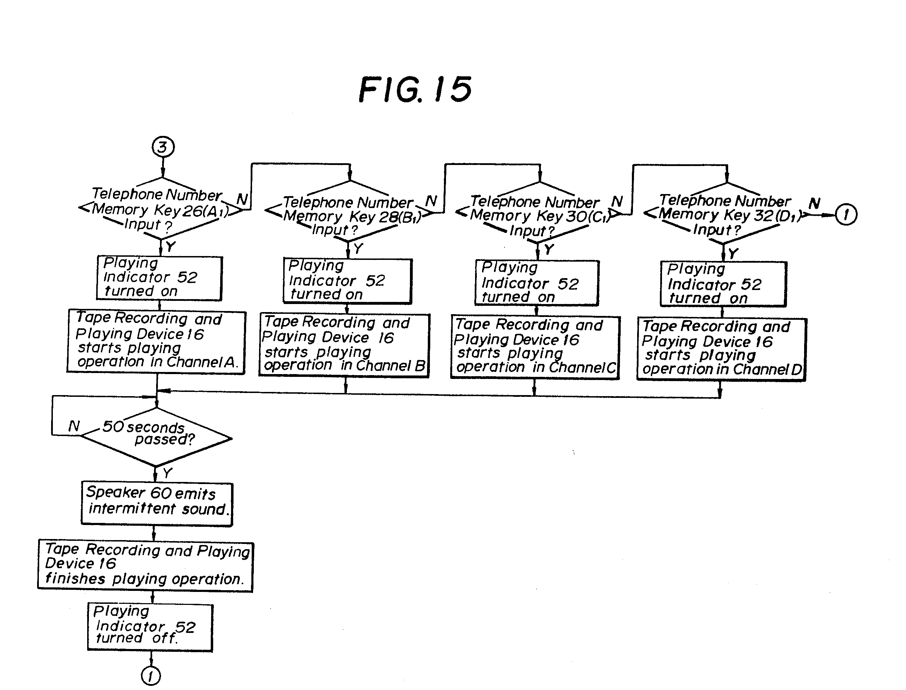

The aural information recorded in the cassette magnetic tape 20 can be reproduced for confirmation, as follows: The memory key 34 and then the test key 40 are pushed. Next, one of the telephone number memory keys 26 $(A_1)$, 28 $(B_1)$, 30 $(C_1)$ and 32 $(D_1)$ corresponding to the channel of the cassette magnetic tape 20 to be played is pushed (See Fig. 15.). Then, the playing indicator 52 will be turned on, and the tape recording and playing device 16 will start the playing operation so that the aural information recorded in the channel is reproduced through the speaker 60. In an endless tape having tracks corresponding to the channels, this reproduction is immediately started from the beginning. In a certain period of time (preferably about 50 seconds, but not being restricted thereto inasmuch the aural information recorded in the channel can be reproduced to its end at least one time) after the starting of the playing operation, the speaker 60 will emit an intermittent sound, the tape recording and playing device 16 finishing the playing operation and the playing indicator 52 being turned off.

In addition to the storing of the telephone numbers and the recording of the aural information, it is further necessary to make the following preparations: The telephone lines T and R are connected with the automatic dialing system 10 by means of the connector 64. The telephone number call speed is selected between 20 pps and 10 pps by means of the switch 66. Also, the rod antenna 62 is set up. Furthermore, the switch 58 is pushed to the "memory lock" position in which all the keys are in disabled electric condition in order to prevent the stored telephone numbers or the recorded aural information from being erased by an inadvertent actuation of the keyboard 12.

Operation:

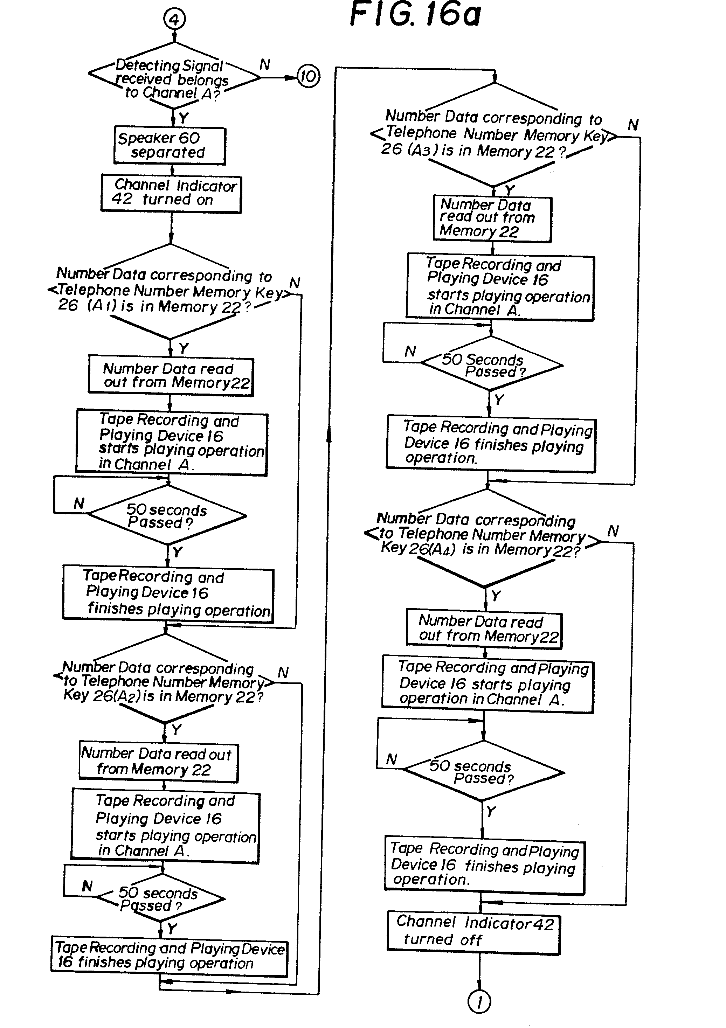

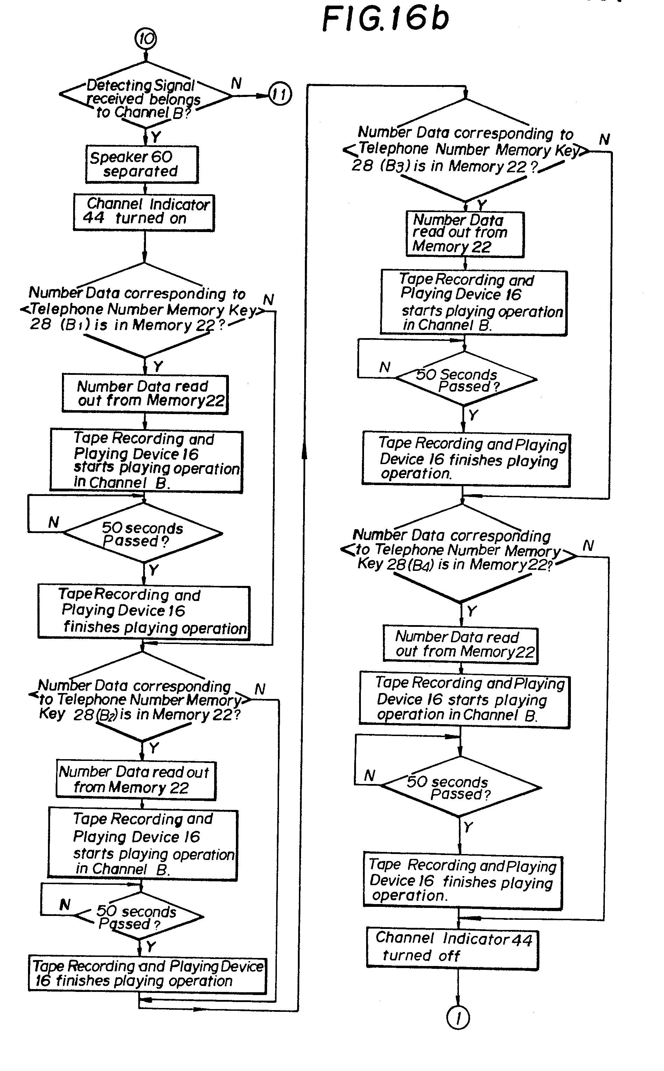

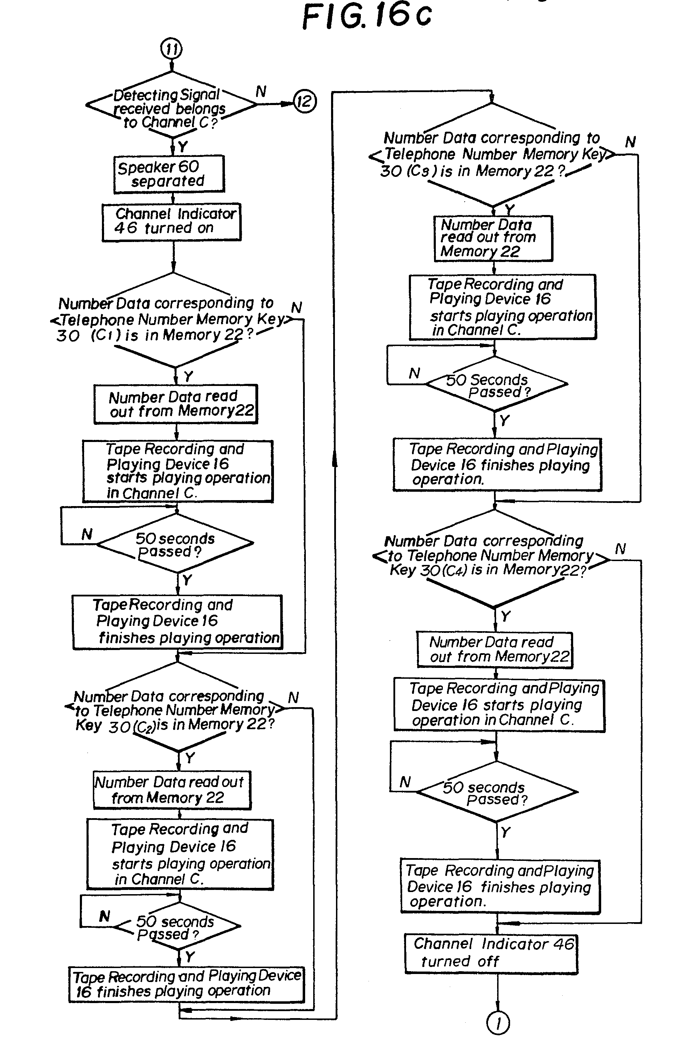

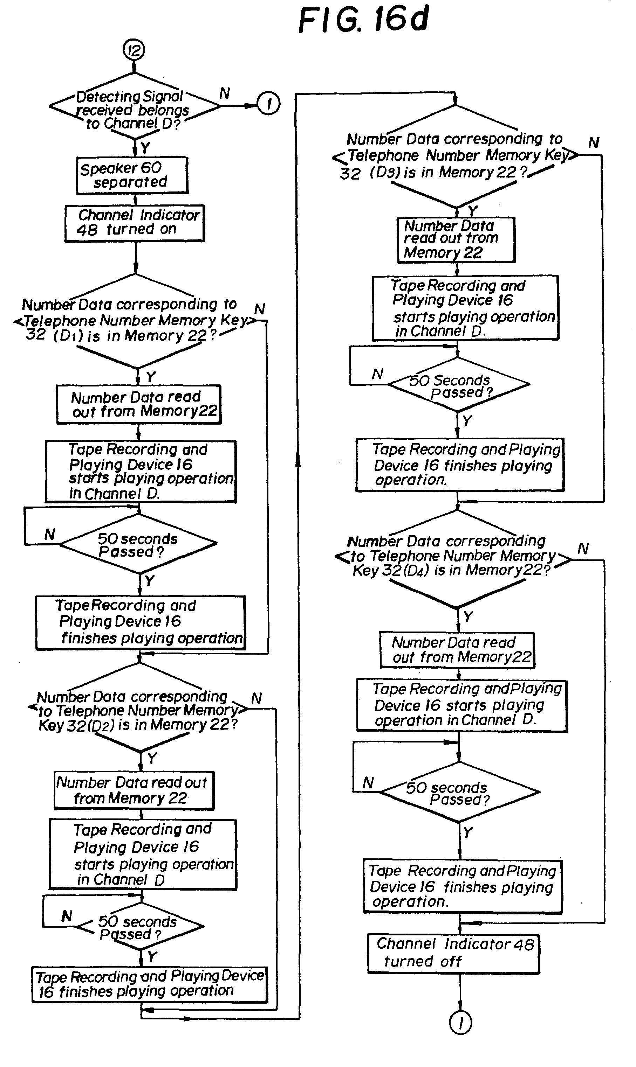

After the above-mentioned preparations have been made, if any of the command keys 204, 206, 208 and 210 of the transmitter 200 is pushed, or if any of the channels A, B, C and D is selected by means of a switch (not shown) connected with the automatic dialing system 10 by wires, or if aural information corresponding to one of the channels A, B, C and D is inputted through the microphone 56, then the CPU 76 will behave in accordance with the program of Fig. 16, and call signals for a telephone number corresponding to the channel signal received and aural information corresponding to said channel signal, will be delivered. For example, when the command key 204 is pushed, the channel signal generating circuit 212 will generate a channel A signal, which will be transmitted by the transmitting circuit 214 through the wire antenna of the strap 202. The channel A signal will enter the receiver circuit 74 of the automatic dialing system 10 through the rod antenna 62, and will be evaluated by the CPU 76 to belong to the channel A. Then, the speaker 60 will be separated from the electric circuit and the channel indicator 42 will be turned on. Confirmation will now be made as to whether a telephone number is stored in an address within the memory 22 corresponding to the telephone number memory key 26 ($A_1$).

If in store, the telephone number will be read out and delivered through the control circuit 78 into the telephone lines T and R as call signals. If pause datum is stored on this address within the memory 22 together with the telephone number, "0" signal will be delivered and, after a pause, the call signals for the telephone number will be delivered. Then, the tape recording and playing device 16 will start the playing operation, and the aural information recorded in the channel A of the cassette magnetic tape 20 will be reproduced and delivered through the control circuit 78 into the telephone lines T and R. In a certain period of time (a period of time allotted to the channel A, which may be about 50 seconds) after the starting of the playing operation, the tape recording and playing device 16 will stop the playing operation. If, in the aforesaid confirmation, no telephone number is found in said address within the memory 22 corresponding to the telephone number memory key 26 ($A_1$), the reading out of the telephone number and the reproduction of the aural information will be jumped over and the next confirmation procedure will be made. In particular, when the tape recording and playing device 16 finishes the playing operation, the next confirmation will be made as to whether a telephone number is stored in an address within the memory 22 corresponding to the telephone number memory key 26 ($A_2$). If stored, the telephone number will be read out and delivered into the telephone lines T and R as call signals. Then, the aforesaid aural information stored in the channel A of the cassette magnetic tape 20 will be reproduced and delivered into the telephone lines T and R again. In this way, confirmation will be made in regular sequence as to whether a telephone number is stored in each address within the memory 22 corresponding to each of the telephone number memory keys 26 ($A_1$) to ($A_4$). If a telephone number is found in the final confirmation, then after the delivery of the call signals for the telephone number and the subsequent delivery of the aural information in the channel A, the channel indicator 42 will be turned off and the CPU 76 will finish its operation.

When the command key 206 is pushed, the channel signal generating circuit 212 will generate a channel B signal, which will be transmitted to the automatic dialing system 10 and judged by the CPU 76 to belong to the channel B. The speaker 60 will be separated from the electric circuit and the channel indicator 44 will be turned on. Then, confirmation will be made in regular sequence as to whether a telephone number is stored in each address within the memory 22 corresponding to each of the telephone number memory keys 28 $(B_1)$ to $(B_4)$ in the channel B. If the telephone number is stored, call signals will be delivered and the aural information recorded in the channel B of the cassette magnetic tape 20 will be delivered. After that, the channel indicator 44 will be turned off.

When the command key 208 is pushed, the channel signal generating circuit 212 will generate a channel C signal, which will be transmitted to the automatic dialing system 10 and judged by the CPU 76 to belong to the channel C. In the same way as mentioned above, call signals for the telephone number stored in each address within the memory 22 corresponding to each of the telephone number memory keys 30 $(C_1)$ to $(C_4)$ in the channel C are delivered in regular sequence, and the aural information recorded in the channel C of the cassette magnetic tape 20 is delivered each time.

When the command key 210 is pushed, the channel signal generating circuit 212 will generate a channel D signal, which will be transmitted to the automatic dialing system 10 and judged by the CPU 76 to beling to the channel D.   Then, call signals for the telephone number stored in each address within the memory 22 corresponding to each of the telephone number memory keys 32 $(D_1)$ to $(D_4)$ in the channel D are delivered in regular sequence, and the aural information recorded in the channel D of the cassette magnetic tape 20 is delivered each time.

If, for example, the command key 206 is pushed when the calling of a telephone number or the delivery of the aural information in the channel A is in progress after the command key 204 is pushed, then the calling of each telephone number and the delivery of the aural information in the channel B will be performed after the calling of all the telephone numbers and the delivery of the aural information in the channel A, are completed.

Therefore, if the desired command key 204, 206, 208 or 210 of the transmitter 200 is pushed, or if the desired channel A, B, C or D is selected by means of said switch connected with the automatic dialing system 10 by wires, or if aural information corresponding to the desired channel

A, B, C or D is inputted through the microphone 56, then the automatic dialing system 10 will automatically dial each of the corresponding telephone numbers stored in the memory 22, and automatically send the aural information recorded in the cassette magnetic tape 20. The aural information may be, for example, a message that someone has been taken suddenly ill, a fire has broken out, someone is in danger, or any other emergency has arisen. The telephone numbers to be automatically dialed may be, for example, those of neighbors, friends, relatives, doctors, etc., or the telephone number of a company guarding the building by contract or any other organization. Provided, for example, that the telephone numbers of a doctor, neighbors, friends, brothers and sisters are respectively stored in addresses within the memory 22 corresponding to the telephone number memory keys 26 ($A_1$) to ($A_4$) in the channel A and a message that the user of the automatic dialing system 10 has taken suddenly ill is recorded in the channel A of the cassette magnetic tape 20, then even when the user is actually seized with a sudden illness and cannot use a telephone, he can call the doctor, neighbors, friends, brothers and sisters on the phone and inform them of his sudden illness only by pushing the command key 204 of the transmitter 200 which he has, or by selecting the channel A by means of the remote control switch or the predetermined aural information. Such persons who have received the information by telephone from the automatic dialing system can give him timely help. Even when the doctor is absent, the automatic dialing system 10 will inform the other persons of his illness. Therefore, there is a strong possibility of the information being received.

The cassette magnetic tape 20 of the endless type is more suitable for use in such emergency cases than a regular cassette magnetic tape, because it does not require rewinding time.

When the tape recording and playing device 16 is constructed so that the pinch roller 112 presses the tape against the capstan 96 and the recording and playing head 108 and the erasing head 110 are in contact with the tape all the time when the cassette magnetic tape 20 is in the device 16, then the mechanism for changing them over between the setting position and the releasing position can be relatively simple and therefore the device 16 can be manufactured less expensively. In this case, however, a trouble is liable to occur owing to the sticking of the tape to the pinch roller 112. To prevent such a trouble, the CPU 76 actuates the electric motor 94 to rotate the pinch roller 112 for a certain amount at certain time intervals. As a result, the tape recording and playing device 16 can play the tape without any trouble even when the device 16 is suddenly used after the tape has been in the device 16 for a long period of time.

Thus, the automatic dialing system 10 may deliver the aural information after the call signals no matter whether the telephone is answered. Or, the system 10 may deliver the aural information soon after confirming that the telephone is answered. Alternatively, if the telephone remains unanswered for a certain period of time, the system 10 may dial the next telephone number without delivering the aural information.

Obviously many modifications and variations of the present invention are possible in the light of the above teachings. It is therefore to be understood that within the scope of the appended claims the invention may be practiced otherwise than as specifically described.

0096401

- 27 -

Wagner Shokai Inc.
14-4, Yanagibashi 2-chome,
Taito-ku, Tokyo, Japan


Patent Claims

1. An automatic dialing system, characterized by means for automatically sending, when said system has received a predetermined signal, desired aural information to a telephone connected to predetermined telephone lines.

2. An automatic dialing system as claimed in claim 1, connected to telephone lines, characterized by means for receiving the predetermined signal, means for delivering call signals for a predetermined telephone number when said receiving means has received said signal, and means for sending the predetermined aural information.

3. An automatic dialing system as claimed in claim 2, characterized in that said means for sending aural information is adapted to send said aural information when said call signals have been answered.

4. An automatic dialing system as claimed in claim 2 or 3, characterized in that said means for delivering call signals is adapted to deliver the call signals for a plurality of predetermined telephone numbers in regular sequence.

5. An automatic dialing system as claimed in any one of claims 1 to 4, characterized in that said means for sending aural information has means (16) for playing an audio tape in which said aural information is recorded in advance.

6. An automatic dialing system as claimed in any one of claims 1 to 4, characterized in that said means for sending aural information has tape recording and playing means (16) which can record said aural information in the audio tape and reproduce said aural information recorded therein.

7. An automatic dialing system as claimed in claim 5 or 6, characterized in that said playing means (16) is adapted to use an endless tape, and whenever said endless tape is loaded therein a tape feed mechanism (96, 112) is in pressing contact with said endless tape, and heads (108, 110) are in contact with said endless tape.

8. An automatic dialing system as claimed in claim 7, characterized in that said tape feed mechanism is adapted to rotate, independently of its tape feed motion, a pinch roller (112) for a certain amount at certain time intervals so as to prevent said tape from sticking to said pinch roller.

9. An automatic dialing system as claimed in any one of claims 1 to 8, characterized by means for transmitting predetermined signals.

10. An automatic dialing system as claimed in claim 2 or any of claims 3 to 9 referred to claim 2, characterized in that said receiving means is adapted to receive a plurality of predetermined signals, and said sending means is adapted to send a piece of aural information, corresponding to a signal received, among a plurality of predetermined pieces of aural information.

11. An automatic dialing system as claimed in any of claims 1 to 10, connected to telephone lines, characterized by means for receiving a plurality of predetermined channel signals, means for delivering, when said receiving means has operated, call signals for a telephone number corresponding to a channel signal received, and means for sending aural information corresponding to said channel signal received.

12. An automatic dialing system as claimed in claim 11 directly or indirectly referred to claim 5 or 6, characterized in that said tape playing means are adapted for playing such an audio tape in which said aural information is recorded in different tracks corresponding to said channel signals.

13. An automatic dialing system as claimed in claim 9 or any of claims 10 to 12 referred to claim 9, characterized in that the means for transmitting present a plurality of predetermined channel signals and said system connected to the telephone lines comprises means for receiving said channel signals, means for delivering in regular sequence, when said receiving means has operated, call signals for a plurality of telephone numbers corresponding to a channel signal received, and means for sending the aural information in correspondence to said channel signal received, each time said call signals have been answered.

*FIG. 1*

*FIG. 3*

# FIG. 2

FIG. 4

FIG. 5

FIG. 7

FIG. 6

## FIG.8

## FIG.10

## FIG.9

## FIG. 11

## FIG. 12

# FIG. 13a

Start — ①

Receiver Circuit 74 Received? — Y → ④

N

Memory Key 34 Input? — N → ①

Y

Speaker 60 emits confirmation sound.

Record Key 38 Input? — Y → ②

N

Test Key 40 Input? — Y → ③

⑤ → N

Telephone Number < Memory Key 26 (A₁) Input? — N → ⑥

Y

Speaker 60 emits confirmation sound.

One of Ten Key 24 "O" to "9" Input? — N → Pause Key 36 Input? — N → Telephone Number < Memory Key 26 (A₁) Input? — N → ①

Y                                    Y                          Y

Speaker 60 emits confirmation sound.    Speaker 60 emits confirmation sound.    Speaker 60 emits confirmation sound.

Number Data stored in Memory 22    Pause Data stored in Memory 22    Number Data corresponding to the Key eliminated from Memory 22

N ← Memory Key 34 Input?                                          ①

Y

⑤

## FIG.13b

6

Telephone Number <Memory Key 26(A₂)> Input? —N→ 7

Y

Speaker 60 emits confirmation sound.

One of Ten Keys 24 "0" to "9" Input? —N→

Y

Speaker 60 emits confirmation sound.

Number Data stored in Memory 22

N← Memory Key 34 Input?

Y

5

Pause Key 36 Input? —N→

Y

Speaker 60 emits confirmation sound.

Pause Data stored in Memory 22

Telephone Number <Memory Key 26(A₂) Input? —N→ 1

Y

Speaker 60 emits confirmation sound.

Number Data corresponding to the Key eliminated from Memory 22

1

## FIG.13c

7

Telephone Number <Memory Key 26(A₃) Input? —N→ 8

Y

Speaker 60 emits confirmation sound.

One of Ten Keys 24 "0" to "9" Input? —N→

Y

Speaker 60 emits confirmation sound.

Number Data stored in Memory 22

N← Memory Key 34 Input?

Y

5

Pause Key 36 Input? —N→

Y

Speaker 60 emits confirmation sound.

Pause Data stored in Memory 22

Telephone Number <Memory Key 26(A₃) Input? —N→ 1

Y

Speaker 60 emits confirmation sound.

Number Data corresponding to the Key eliminated from Memory 22

1

# FIG.13d

(8)

Telephone Number Memory Key 26(A4) Input? — N → (9)

| Y

Speaker 60 emits confirmation sound.

One of Ten Keys 24 "0" to "9" Input? — N

| Y

Speaker 60 emits confirmation sound.

Number Data stored in Memory 22

N — Memory Key 34 Input?

| Y

(5)

Pause Key 36 Input? — N

| Y

Speaker 60 emits confirmation sound.

Pause Data stored in Memory 22

Telephone Number Memory Key 26(A4) Input? — N → (1)

| Y

Speaker 60 emits confirmation sound.

Number Data corresponding to the Key eliminated from Memory 22

(1)

9/16

0096401

# FIG.13e

⑨

Telephone Number < Memory Key 28(B₁) Input? — N

Y

Speaker 60 emits confirmation sound.

One of Ten Keys 24 "0" to "9" Input? — N → Pause Key 36 Input? — N → Telephone Number < Memory Key 28(B₁) Input? — N → ①

Y

Speaker 60 emits confirmation sound.

Number Data stored in Memory 22

Y

Speaker 60 emits confirmation sound.

Pause Data stored in Memory 22

Y

Speaker 60 emits confirmation sound.

Number Data corresponding to the Key eliminated from Memory 22

①

N — Memory Key 34 Input?

Y

⑤

Telephone Number < Memory Key 32(D₄) Input? — N → ①

Y

Speaker 60 emits confirmation sound.

One of Ten Keys 24 "0" to "9" Input? — N → Pause Key 36 Input? — N → Telephone Number < Memory Key 32(D₄) Input? — N → ①

Y

Speaker 60 emits confirmation sound.

Number Data stored in Memory 22

Y

Speaker 60 emits confirmation sound.

Pause Data stored in Memory 22

Y

Speaker 60 emits confirmation sound.

Number Data corresponding to the Key eliminated from Memory 22

①

N — Memory Key 34 Input?

Y

⑤

FIG. 14

② → Telephone Number Memory Key 26(A₁) Input? —N→

Telephone Number Memory Key 28(B₁) Input? —N→

Telephone Number Memory Key 30(C₁) Input? —N→

Telephone Number Memory Key 32(D₁) Input? —N→ ①

Y → Recording Indicator 50 turned on

Y → Recording Indicator 50 turned on

Y → Recording Indicator 50 turned on

Y → Recording Indicator 50 turned on

Tape Recording and Playing Device 16 starts recording operation in Channel A.

Tape Recording and Playing Device 16 starts recording operation in Channel B.

Tape Recording and Playing Device 16 starts recording operation in Channel C

Tape Recording and Playing Device 16 starts recording operation in Channel D

N ← 50 seconds Passed?

Y → Speaker 60 emits intermittent sound.

Tape Recording and Playing Device 16 finishes recording operation.

Recording Indicator 50 turned off.

①

# FIG. 15

FIG. 16a

13/16

0096401

FIG.16b

0096401

14/16

(10)

Detecting Signal received belongs to Channel B? — N → (11)

Y

Speaker 60 separated

Channel Indicator 44 turned on

Number Data corresponding to <Telephone Number Memory Key> 28 (B₁) is in Memory 22? — N

Y

Number Data read out from Memory 22

Tape Recording and Playing Device 16 starts playing operation in Channel B.

50 seconds Passed? — N

Y

Tape Recording and Playing Device 16 finishes playing operation

Number Data corresponding to Telephone Number Memory Key 28 (B₂) is in Memory 22? — N

Y

Number Data read out from Memory 22

Tape Recording and Playing Device 16 starts playing operation in Channel B.

50 seconds Passed? — N

Y

Tape Recording and Playing Device 16 finishes playing operation

Number Data corresponding to <Telephone Number Memory Key> 28 (B₃) is in Memory 22? — N

Y

Number Data read out from Memory 22

Tape Recording and Playing Device 16 starts playing operation in Channel B.

50 Seconds Passed? — N

Y

Tape Recording and Playing Device 16 finishes playing operation.

Number Data corresponding to Telephone Number Memory Key 28 (B₄) is in Memory 22? — N

Y

Number Data read out from Memory 22

Tape Recording and Playing Device 16 starts playing operation in Channel B.

50 seconds Passed? — N

Y

Tape Recording and Playing Device 16 finishes playing operation.

Channel Indicator 44 turned off

(1)

# FIG.16c

15/16 0096401

Detecting Signal received belongs to Channel C? — N → (12)

Y

Speaker 60 separated

Channel Indicator 46 turned on

Number Data corresponding to <Telephone Number Memory Key> 30 (C1) is in Memory 22? — N

Y

Number Data read out from Memory 22

Tape Recording and Playing Device 16 starts playing operation in Channel C.

N — 50 seconds Passed?

Y

Tape Recording and Playing Device 16 finishes playing operation

Number Data corresponding to Telephone Number Memory Key 30 (C2) is in Memory 22? — N

Y

Number Data read out from Memory 22

Tape Recording and Playing Device 16 starts playing operation in Channel C.

N — 50 seconds Passed?

Y

Tape Recording and Playing Device 16 finishes playing operation

Number Data corresponding to Telephone Number Memory Key 30 (C3) is in Memory 22? — N

Y

Number Data read out from Memory 22

Tape Recording and Playing Device 16 starts playing operation in Channel C.

N — 50 Seconds Passed?

Y

Tape Recording and Playing Device 16 finishes playing operation.

Number Data corresponding to Telephone Number Memory Key 30 (C4) is in Memory 22? — N

Y

Number Data read out from Memory 22

Tape Recording and Playing Device 16 starts playing operation in Channel C.

N — 50 seconds Passed?

Y

Tape Recording and Playing Device 16 finishes playing operation.

Channel Indicator 46 turned off

(1)

FIG. 16d

16/16   0096401

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 051 383  (SALT LAKE COMMUNICATIONS) <br> * Page 5, lines 1-13; page 5, lines 19-26; page 6, lines 12-13; page 19, lines 15-20; page 27, line 23 - page 30, line 6; page 33, lines 12-14; page 46, line 13 - page 47, line 3 * | 1-6,9 | H 04 M    11/04 <br> G 08 B    25/02 |
| A | | 7,13 | |
| | --- | | |
| X | EP-A-0 037 573  (NEWART ELECTRONIC SCIENCES) <br> * Page 2, line 12 - page 3, line 28; page 7, line 36 - page 8, line 25; page 10, lines 14-31 * | 1,2,4, 9-11 | |
| | --- | | |
| X | US-A-4 219 698  (BIRILLI et al.) <br><br> * Abstract; column 7, line 20 - column 8, line 5 * | 1,2,5, 6,9 | TECHNICAL FIELDS SEARCHED (Int. Cl. ³) <br><br> H 04 M    11/04 |
| A | | 7 | |
| | --- | | |
| X | US-A-3 843 841  (RUBINSTEIN) <br><br> * Abstract * | 1,2,5, 9 | |
| | ---               -/- | | |

The present search report has been drawn up for all claims

| Place of search THE HAGUE | Date of completion of the search 08-09-1983 | Examiner MIKKELSEN C. |
|---|---|---|

EPO Form 1503. 03 82

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 258 981   (GENERAL ALARM CORP.)<br>* Page  1,  lines  1-29; page 4, line 24 - page 6, line 7; page 7, line 28 - page 8, line 11 * | 1-5,7, 10-13 | |
| A | GB-A-1 113 826   (SHORROCK DEVELOPMENTS LTD.)<br>* Page 1, lines 8-58 * | 7,8 | |

TECHNICAL FIELDS
SEARCHED (Int. Cl. ³)

The present search report has been drawn up for all claims

| Place of search | Date of completion of the search | Examiner |
|---|---|---|
| THE HAGUE | 08-09-1983 | MIKKELSEN C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82